# EUROPEAN PATENT APPLICATION

(11) **EP 4 369 540 A1**
(43) Date of publication of application: **15.05.2024**
(21) Application number: 22206064.2
(22) Date of filing: 08.11.2022
(51) Int. Cl.: H02B 11/24

(54) **SHUTTER SYSTEM FOR SWITCHGEAR**

(71) Applicant: ABB SCHWEIZ AG, 5400 Baden (CH)
(72) Inventor: PYCLIK, Tomasz, 43-300 Bielsko-Biala (PL); ZMIJ, Zdzislaw, 43-365 Wilkowice (PL); BABIK, Tomasz, 43-353 Porabka (PL)
(74) Representative: AOMB Polska Sp. z.o.o.

(57) **Abstract**

The present disclosure relates to a shutter system for switchgears. According to the invention there is provided a shutter system comprising a main barrier (200-1) with at least one opening for insertion of at least one connector of a circuit breaker (100-3), a guiding means in a form of at least a first guide rail (200-3) for guiding a shutter (200-2) between a closed position and an open position, a driving mechanism for moving a shutter (200-2) between the closed position and the open position, at least one shutter assembly comprising the shutter (200-2) and a carriage element (200-5) and a returning means for retracting the shutter (200-2) from the open position to the closed position.

## Description

### TECHNICAL FIELD

The present disclosure relates to shutter systems for switchgears which are used to shield plugs or terminal contacts arranged to receive circuit breakers. More specifically, the subject matter of the present invention is a shutter system for a switchgear.

### BACKGROUND ART

Electric power systems comprise of switchgears relate to electrical switches or circuit breakers and its functions is to protect, control and isolate electrical equipment. Switchgears are commonly used in electric utility transmission and distribution systems and in medium to large sized commercial or industrial facilities.

Shutter systems in switchgear cabinets are movable between two positions - closed and open. In the closed position a switching device is disconnected from the electrical circuit while in the open position electrical connection is established.

European document EP2482400B1 discloses a shutter system comprising a support frame, a window arranged on the main plane of the shutter support frame, a first shutter, a second shutter, a first pivot arm, a second pivot arm, a pivot anchor, and a shutter activation arm which is in mechanical communication with the pivot anchor. Linear movement of the pivot anchor along the third medial line results in linear movement of the first shutter along the first medial line and linear movement of the second shutter along the second medial line. During receipt of a circuit breaker trolley, the shutter activation rod rotates, and this rotational movement facilitates opening of the shutters, thereby allowing electrical communication between circuit breaker and terminals protected by the shutters.

Known solutions comprising a mechanism engaging circuit breaker connectors with switchgear plugs encounter a problem with coordination of a circuit breaker movement and a shutter opening. It is a therefore a challenge to properly corelate a short linear movement with a particular wide opening of the shutter. Currently, most of the known solutions use a lever or guide systems as a driving mechanism for shutter systems. Those solutions however are problematic to achieve higher stroke ratios.

### SUMMARY OF THE INVENTION

It is the objective of the present invention to provide a shutter system that eliminates the above-identified drawbacks of the prior art.

According to a first aspect of the present invention there is provided a shutter system for a switchgear comprising:
a main barrier with at least one opening for insertion of at least one connector of a circuit breaker, said main barrier being mountable to the switchgear,
a support frame,
a guiding means in a form of at least a first guide rail attached to the support frame for guiding a shutter between a closed position and an open position,
at least one shutter assembly comprising:
   a shutter moveable linearly between the closed position in which the access to the at least one opening in the barrier is prevented and the open position in which the access to the at least one opening in the barrier is enabled,
   a carriage element configured to slide along the first guide rail,
wherein the shutter is coupled with the carriage element,
wherein the carriage element has plurality of interlocking openings arranged along the first guide rail,
a driving mechanism mounted to the support frame for moving the shutter between the closed position and the open position, said driving mechanism comprises at least one driving wheel with a teeth portion that interlocks with the interlocking openings of the carriage element (200-5) during rotation of the driving wheel, wherein said driving wheel comprises a pin protruding from its surface and eccentrically arranged with respect to a rotation axis of the driving wheel,
an actuating element comprising at least one non-linear groove for receiving the pin, wherein the actuating element is configured to slide in a direction transverse to the longitudinal axis of the first guide rail and perpendicular to a plane of the shutter causing rotation of the driving wheel,
a returning means for retracting the shutter from the open position to the closed position.

In one of the embodiment of the invention the shutter system comprises two shutter assemblies and two driving mechanisms, wherein the driving mechanisms are coupled by the actuating element that is common for these two driving mechanisms.

In one embodiment the returning means comprises a first extension spring that connects the support frame with the actuating element.

In yet another embodiment the returning means comprises a second extension spring that connects the two carriage elements.

The returning means is preferably in a form of a plate-like element.

In one of the embodiment the actuating element can also perform the function of the returning means.

The guiding means may also comprise a second guide rail disposed at the top of the shutter, while the first guide rail is disposed at the bottom of the shutter.

In one embodiment the driving wheel is in a form of a gearwheel comprising the teeth portion only around a part of the perimeter.

The non-linear groove of the actuating element is preferably L-shaped.

In one of the preferred embodiments the actuating element is linearly guided by a runner that is attached to the support frame.

According to a second aspect of the present invention there is provided a switchgear comprising the shutter system as claimed above.

### ADVANTAGEOUS EFFECTS

By means of the appropriate size of a toothed wheel, the location of a non-linear groove and the position of a pin, a flexible change of the speed and size of the movable shutters is provided. The use of the two or even more mechanisms provides multiple configurations of displacement of the shutters. The use of the toothed wheel, especially partially toothed wheel, that meshes with corresponding interlocking opening of the carriage element enables wide opening of the shutter in a short stroke.

### BRIEF DESCRIPTION OF THE DRAWINGS

The present disclosure will be now discussed with reference to the drawings, which show in:
Fig. 1a - depicts a shutter system in front-top view in open position,
Fig. 1b - depicts a shutter system in front-top view in closed position,
Fig. 2a - depicts a shutter system in front-bottom view in closed position,
Fig. 2b - depicts a shutter system in front-bottom view in open position,
Fig. 3a - depicts a shutter system in closed position in switchgear cabinet,
Fig. 3b - depicts a shutter system in open position in switchgear cabinet,
Fig. 4 - depicts a circuit breaker trolley.

### DETAILED DESCRIPTION OF THE INVENTION

For a proper understanding of the disclosure, in the detailed description below, corresponding elements or parts of the disclosure will be denoted with identical reference numerals in the drawings.

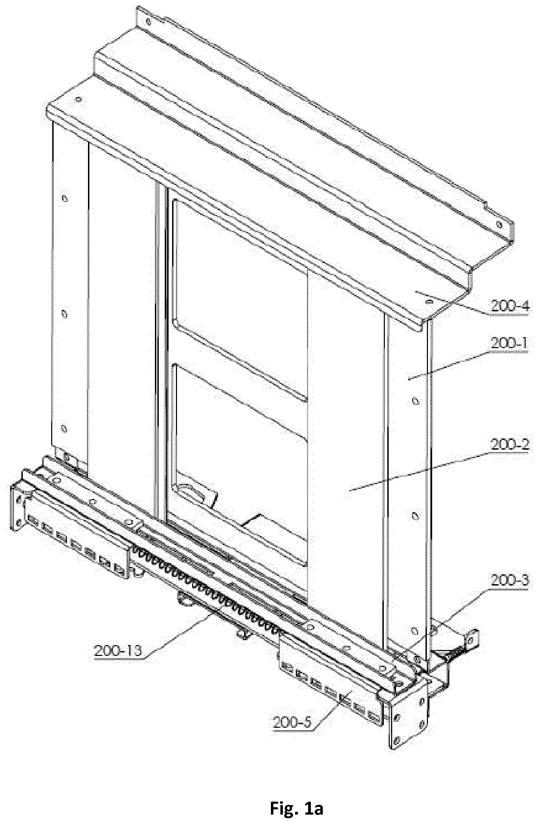

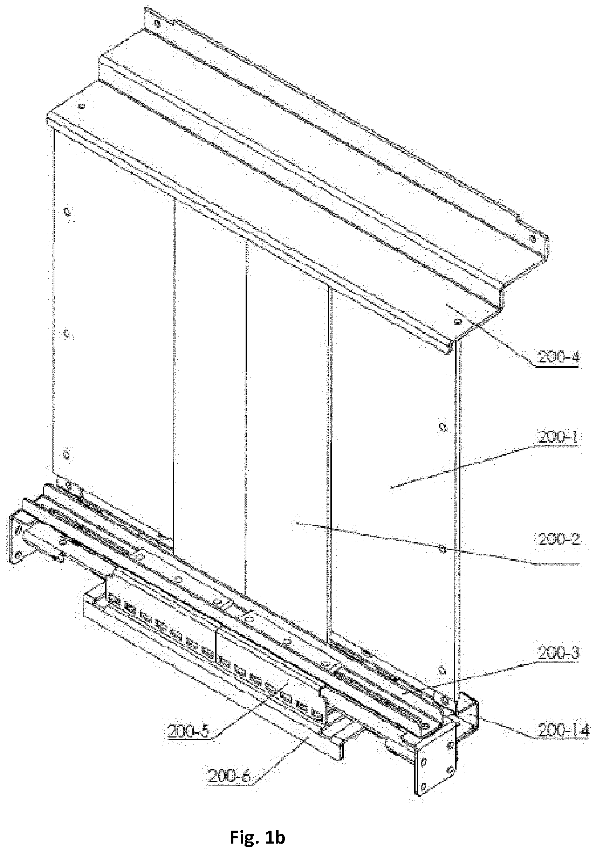

As illustrated in Fig. 1a and 1b a shutter system according to preferred embodiment comprises a main barrier 200-1 which is secured to a frame of a switchgear. The main barrier 200-1 has at least one opening for an insertion of circuit breakers 100-3 adapted to connect with plugs 300. In this embodiment there are two openings. The shutter system further comprises a guiding means in a form of a first guide rail 200-3 and a second guide rail 200-4, wherein the first guide rail 200-3 is below the main barrier 200-1 and the second guide rail 200-4 is above the main barrier 200-1. The guiding means is configured to guide a shutter 200-2 between a closed position and an open position. A driving mechanism suitable for moving the shutter 200-2 between the closed position and the open position is also envisaged.

The shutter system further comprises at least one shutter assembly comprising the shutter 200-2 and a carriage element 200-5. A plane of the shutter 200-2 is parallel to a plane of the main barrier 200-1. The shutter 200-2 moves linearly between the closed position in which the access to the at least one opening in the barrier 200-1 is prevented and the open position in which the access to the at least one opening in the barrier 200-1 is enabled. This embodiment of the invention has two shutter assemblies each having one shutter 200-2. The two shutters 200-2 operates simultaneously in such a manner that one shutter opens to the left and another opens to the right. Fig. 1a shows the shutters 200-2 in the open position providing access to plugs 300 through the opening in the main barrier 200-1, while Fig. 1b shows the shutters 200-2 in the closed position in which access is prevented.

The shutter 200-2 is attached the carriage element 200-5 that is coupled with the first guide rail 200-3. The carriage element 200-5 is configured to slide along the first guide rail 200-3. The carriage element 200-5 has plurality of interlocking openings arranged in an upright wall that projects outwardly from the first guide rail 200-3. More precisely the interlocking opening are arranged along the first guide rail 200-3 on a plane parallel to the shutter 200-2. In one of the embodiments the carriage element 200-5 has a L-shape, but different shapes are also possible

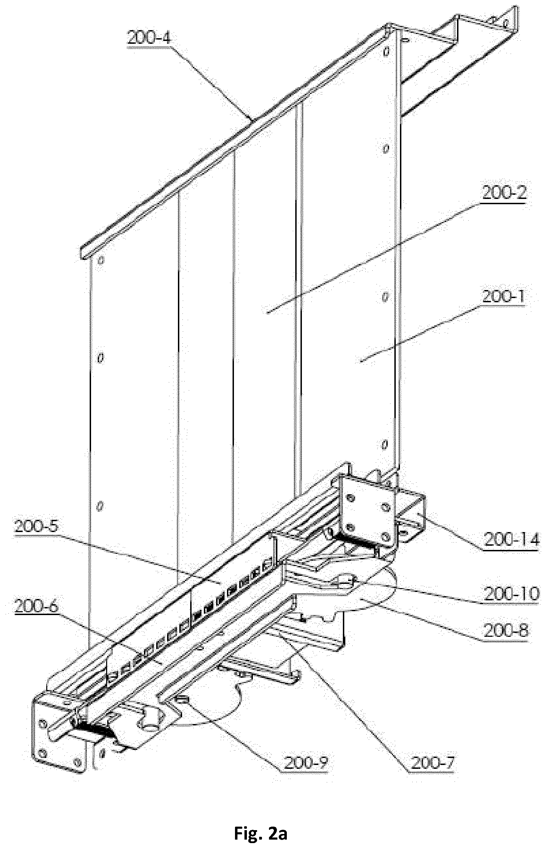

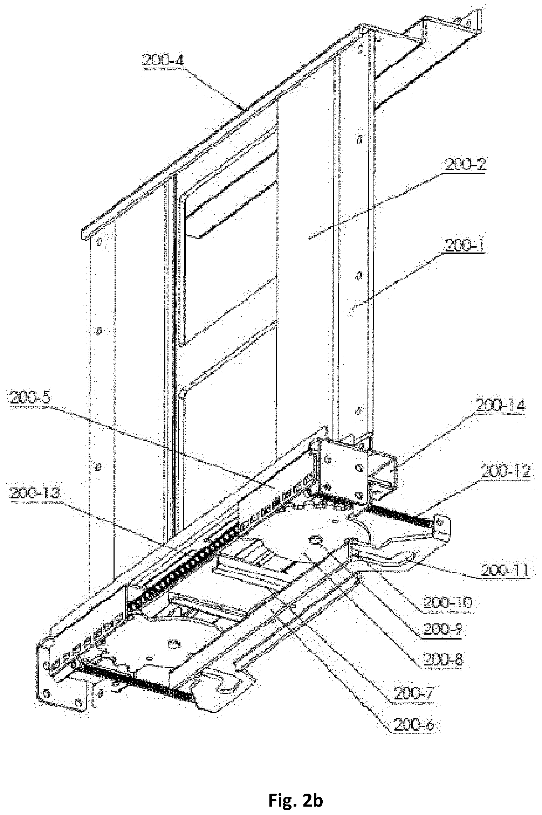

Further, Fig. 2a and 2b show the driving mechanism comprising at least one driving wheel 200-8 and a actuating element 200-6. The driving wheel 200-8 comprises a teeth portion that interlocks with the interlocking openings of the carriage element 200-5 during rotation of the driving wheel 200-8. In preferred embodiment the driving wheel 200-8 comprises the teeth portion around a perimeter. The driving wheel 200-8 comprises a pin 200-10 that protrudes from its flat surface, more precisely, the pin 200-10 is eccentrically arranged with respect to a rotation axis 200-9 of the driving wheel 200-8. An longitudinal axis of the pin 200-10 is perpendicular to the driving wheel 200-8. The eccentrically arranged pin 200-10 causes the rotation of the driving wheel 200-8. The driving wheel 200-8 is mounted to a support frame 200-14.

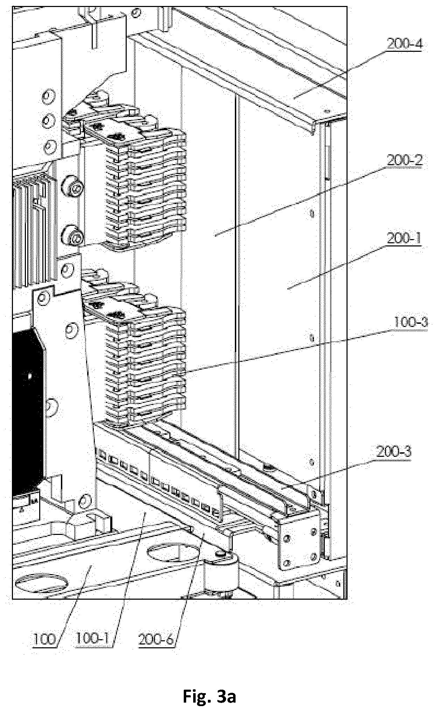

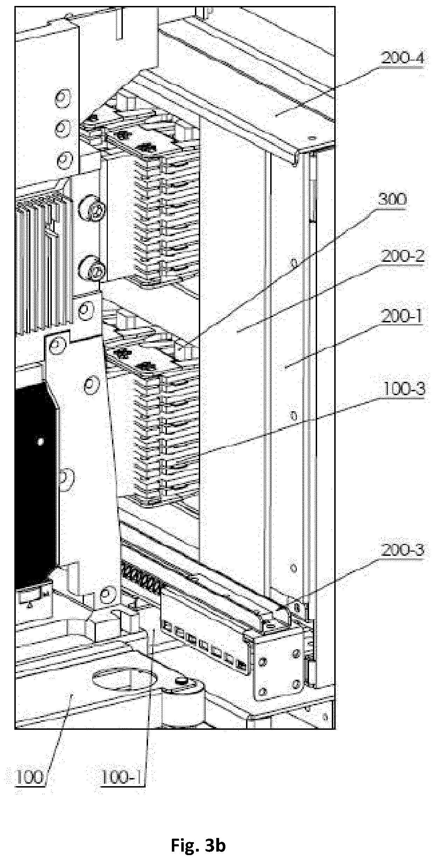

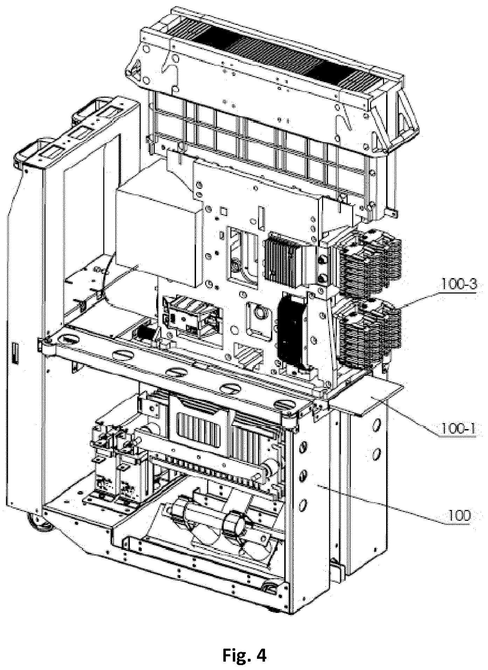

Figs. 2a and 2b show a position of the actuating element 200-6. The actuating element 200-6 is responsible for putting the driving wheel 200-8 into motion by pushing the pin 200-10, thereby causing movement of the carriage element 200-5 and opening the shutter 200-2. The actuating element 200-6 is activated by activating means, for example in a form of a plate-pusher 100-1 which is placed on a circuit breaker trolley 100 (see Fig. 3a, 3b and 4).

The actuating element 200-6 comprises at least one non-linear groove 200-11 for receiving the pin 200-10. The shape of the groove 200-11 should be such that the rotation of the driving wheel 200-8 is ensured, for example substantially L-shaped as in the discussed embodiment. The plate-pusher 100-1 presses the actuating element 200-6 activating the driving mechanism, pushing the pin 200-10 what causes the rotation of the driving wheel 200-8. The actuating element 200-6 moves in a linear way. This linear movement of the actuating element 200-6 can be provided by a runner 200-7 that is attached to the support frame 200-14. The actuating element 200-6 moves in a direction transverse to the longitudinal axis of the first guide rail 200-3 and perpendicular to the plane of the shutter 200-2. The teeth on the driving wheel 200-8 meshes with interlocking openings of the carriage element 200-5 thereby setting the shutter 200-2 into sliding movement and displacing the shutter 200-2 into the open position. Location of the non-linear groove 200-11 and position of the pin 200-10 allow wide range of adjusting the speed and stroke of opening the shutter 200-2. The actuating element 200-6 is preferably a plate-like element.

In embodiment in which the shutter system comprising one shutter assembly, in the closed position of the shutter, the carriage element 200-5 with the shutter 200-2 is moved towards center of the opening in the main barrier 200-1 thereby covering the opening, and in the open position, the carriage element 200-5 with the shutter 200-2 is moved away from the center of the opening in the main barrier 200-1 thereby uncovering the opening. In other embodiment of the invention there can be two shutter assemblies and two driving mechanisms accordingly that can operate in a synchronous manner, either independently or in cooperation. The discussed embodiments show the shutter system with two driving mechanisms that are coupled by one actuating element 200-6 that is common for these two driving mechanisms. In the closed position, the carriage elements 200-5 are moved towards center of the opening in the main barrier 200-1 and in the open position the carriage elements 200-5 are moved away from the center of the opening in the main barrier 200-1, one to the left and one to the right. In yet another embodiment shutter assemblies can be configured such that the two carriage elements 200-5 move to the same side.

The shutter system is further equipped with a returning means which causes the at least one shutter 200-2 to retract or return from the open position to the closed position. A spring is preferably used as the returning means. In the embodiment presented in the drawings, the returning means comprises a first extension spring 200-12 and a second extension spring 200-13. The first extension spring 200-12 connects the actuating element 200-6 in the form of a plate with the support frame 200-14. When the plate-pusher 100-1 stops exerting pressure, the pulling force of the first extension spring 200-12 retracts or brings back the actuating element 200-6 and the shutters 200-2 to the closed position. The second extension spring 200-13 connects the two carriage elements 200-5 and brings them together. The second extension spring 200-13 operates in similar manner and for the same purpose as the first extension spring 200-12. The shutter system can have either one of the first and second spring or both of them.

In another embodiment the actuating element 200-6 acts also as the returning means. In this case the first extension spring 200-12 and the second extension spring 200-13 are no longer needed. In such embodiment the actuating element 200-6 is attached to the plate-pusher 100-1. In yet another embodiment the plate-pusher 100-1 itself can act as the returning means and the actuating element.

The shutter system according to the present invention is designed for protection of the attending personnel against contact with main circuit, as well as preventing the access to unauthorized persons.

## Claims

1. A shutter system for a switchgear comprising:
a main barrier (200-1) with at least one opening for insertion of at least one connector of a circuit breaker (100-3), said main barrier (200-1) being mountable to the switchgear,
a support frame (200-14),
a guiding means in a form of at least a first guide rail (200-3) attached to the support frame (200-14) for guiding a shutter (200-2) between a closed position and an open position,
at least one shutter assembly comprising:
a shutter (200-2) moveable linearly between the closed position in which the access to the at least one opening in the barrier (200-1) is prevented and the open position in which the access to the at least one opening in the barrier (200-1) is enabled,
a carriage element (200-5) configured to slide along the first guide rail (200-3),
wherein the shutter (200-2) is coupled with the carriage element (200-5),
wherein the carriage element (200-5) has plurality of interlocking openings arranged along the first guide rail (200-3),
a driving mechanism mounted to the support frame (200-14) for moving the shutter (200-2) between the closed position and the open position, said driving mechanism comprises at least one driving wheel (200-8) with a teeth portion that interlocks with the interlocking openings of the carriage element (200-5) during rotation of the driving wheel (200-8), wherein said driving wheel (200-8) comprises a pin (200-10) protruding from its surface and eccentrically arranged with respect to a rotation axis (200-9) of the driving wheel (200-8),
an actuating element (200-6) comprising at least one non-linear groove (200-11) for receiving the pin (200-10), wherein the actuating element (200-6) is configured to slide in a direction transverse to the longitudinal axis of the first guide rail (200-3) and perpendicular to a plane of the shutter (200-2) causing rotation of the driving wheel (200-8),
a returning means for retracting the shutter (200-2) from the open position to the closed position.

2. The shutter system according to claim 1, **wherein** comprising two shutter assemblies and two driving mechanisms, wherein the driving mechanisms are coupled by the actuating element (200-6) that is common for these two driving mechanisms.

3. The shutter system according to claim 1, **wherein** the returning means is a first extension spring (200-12) that connects the support frame (200-14) with the actuating element (200-6).

4. The shutter system according to claim 1 or 3, **wherein** the returning means is a second extension spring (200-13) that connects the two carriage elements (200-5).

5. The shutter system according to claim 1 or 2, **wherein** the returning means is in a form of a plate-like element.

6. The shutter system according to claim 5, **wherein** the actuating element (200-6) is the returning means.

7. The shutter system according to any of claims 1-6, **wherein** the guiding means comprises a second guide rail (200-4) disposed at the top of the shutter (200-2).

8. The shutter system according to any of claims 1-7, **wherein** the driving wheel (200-8) is in a form of a gearwheel comprising the teeth portion only around a part of the perimeter.

9. The shutter system according to any of claims 1-8, **wherein** the non-linear groove in the actuating element (200-6) is L-shaped.

10. The shutter system according to any of claims 1-9, **wherein** the actuating element (200-6) is linearly guided by a runner (200-7) that is attached to the support frame (200-14).

11. A switchgear comprising the shutter system according to claims 1-10.
